# FASCICULE DE BREVET EUROPEEN

(11) **EP 0 476 083 B1**
(45) Date de publication et mention de la délivrance du brevet: **01.06.1994**
(21) Numéro de dépôt: 91905511.1
(22) Date de dépôt: 21.03.1991
(51) Int. Cl.: B23B 5/12, B23D 79/12

(54) **UNITE D'USINAGE A TETE ROTATIVE PORTANT DES OUTILS PIVOTANTS**
BEARBEITUNGSEINHEIT MIT DREHENDEM KOPF, DER SCHWENKBARE WERKZEUGE TRÄGT
MACHINING UNIT WITH ROTARY HEAD CARRYING PIVOTING TOOLS

(30) Priorité: 26.03.1990 FR 9003993
(43) Date de publication de la demande: 25.03.1992
(73) Titulaire: ESCO S.A., CH-2206 Les Geneveys-sur-Coffrane (CH)
(72) Inventeur: EVARD, Daniel, CH-2205 Montmollin (CH); PIGUET, Pierre-Louis, CH-2300 La Chaux-de-Fonds (CH); ROSSETTI, Hubert, CH-2206 Les Geneveys-sur-Coffrane (CH)
(74) Mandataire: Nithardt, Roland
(86) Numéro de dépôt international: CH9100070
(87) Numéro de publication internationale: WO9114527

(56) Documents cités:
- EP-A- 012 154
- DE-B- 1 104 289
- US-A- 3 817 130
- US-A- 3 866 495

## Description

La présente invention concerne une unité d'usinage à tête rotative portant au moins deux outils pivotants, pour l'usinage d'une pièce non rotative centrée sur l'axe de rotation de la tête, comportant :
- un bâti sur lequel est monté un rotor comprenant la tête rotative et une broche solidaire de cette tête, le rotor étant pourvu d'un conduit axial et couplé à des moyens d'entraînement en rotation,
- des moyens de guidage axial de la pièce, ces moyens étant montés par des paliers dans la broche ou la tête rotative,
- des moyens pour maintenir et déplacer axialement la pièce,
- au moins deux supports d'outils, montés dans la tête rotative de manière à pivoter autour d'axes respectifs parallèles à l'axe de rotation, chaque support comportant un levier de commande disposé transversalement,
- et des moyens de commande de pivotement, coopérant avec lesdits leviers et comprenant au moins un élément rotatif de commande, qui est mobile en translation axiale dans le rotor et couplé à un dispositif de commande de translation, et des paires d'organes d'appui disposés respectivement sur chaque levier de commande et sur l'élément rotatif de commande correspondant, chaque paire d'organes d'appui comprenant une surface directrice et une surface d'appui s'appuyant contre la surface directrice dans une position variable en fonction de la translation de l'élément rotatif de commande.

Les têtes rotatives de tournage à outils pivotants sont utilisées depuis longtemps pour le décolletage. Elles permettent d'usiner des pièces dans de la matière métallique se présentant sous la forme d'un fil de grande longueur que l'on fait avancer axialement à travers le rotor. Les unités de ce genre qui sont actuellement sur la marché disposent généralement de deux ou trois outils dont certains sont commandés indépendamment. Pour éviter les problèmes dus à l'accélération centrifuge résultant de la rotation de la tête, les supports d'outils sont pivotants autour d'axes respectifs excentrés par rapport à l'axe de rotation.

Dans une telle unité, les moyens de commande du pivotement des supports d'outils jouent un rôle essentiel sur les performances de la machine au point de vue de la précision et de la vitesse de travail. Dans un système connu (EP-A-0 278 898), le pivotement de deux porte-outils dans des sens opposés est commandé au moyen d'un élément rotatif à surface conique contre laquelle s'appuie le levier de commande de chaque support correspondant. Cet élément est solidaire d'une bague coulissante déplacée au moyen d'un mécanisme de translation. Le levier est maintenu en appui contre la surface conique par l'effet de l'accélération centrifuge agissant sur un contrepoids, de sorte que la transmission est sans jeu.

Ce système de commande présente certains inconvénients. Comme l'axe de la surface conique est relativement éloigné de l'axe de pivotement du support d'outil correspondant, le rapport de transmission entre le mouvement axial de la surface conique et le déplacement radial de l'outil n'est linéaire que pour de très petits déplacements. Ceci interdit toutes utilisations sans un dispositif de compensation, pour usiner sur des diamètres relativement gros. Il en résulte des imprécisions de l'usinage, même si l'on utilise une commande numérique. D'autre part, pour commander indépendamment plusieurs outils, il est nécessaire d'avoir plusieurs douilles coulissantes concentriques portant chacune un secteur de cône actionnant le levier correspondant. Ceci conduit à une mécanique très complexe, dont la précision doit être très grande. De plus, les surfaces coniques doivent être prévues sur des segments ouverts répartis sur le pourtour du rotor, ce qui rend l'ensemble très sensible aux forces centrifuges. Cette complexité mécanique, l'encombrement qui en résulte et l'effet des forces centrifuges interdisent des vitesses de rotation, donc de travail, particulièrement élevées. Enfin, il est pratiquement impossible d'augmenter le nombre d'outils au-delà de trois sans augmenter de ce fait la complexité et les dimensions du rotor, ce qui aurait pour conséquence de diminuer encore les performances.

La demande de brevet européen N^{º} 12′154 décrit une tête rotative portant une paire d'outils opposés dont chacun a un support pivotant épaulé par un ressort et porté par un coulisseau ajustable radialement. La position des coulisseaux est commandée par déplacement axial d'une cloche à surface intérieure conique contre laquelle les coulisseaux s'appuient. Ce mécanisme de commande situé relativement loin de l'axe de rotation est gros et lourd et il ne permet pas de commander séparéement chaque outil. Les brevets US N^{º} 3′866′495 et 3′817′130 montrent d'autres exemples de têtes rotatives ayant un cône périphérique coulissant qui commande la position radiale de plusieurs outils disposés symétriquement. La demande de brevet allemand N^{º} 1′104′289 décrit un mécanisme plus léger, comportant plusieurs bagues de commande pouvant pivoter séparément et comportant des surfaces d'appui en forme de spirale, mais il s'agit d'un dispositif stationnaire de guidage de la matière et non pas des outils. Ce mécanisme n'est pas rotatif et il ne présente donc pas les problèmes dus aux forces centrifuges.

La présente invention a pour but de pallier les inconvénients mentionnés ci-dessus, en fournissant une tête rotative équipée de moyens de commande de pivotement assurant une grande précision et permettant une construction simple et compacte qui autorise des vitesses de rotation élevées.

Dans ce but, l'invention concerne une unité d'usinage du type spécifié plus haut,. caractérisée en ce que chaque surface directrice correspondant à un support d'outil pivotant a la forme d'une portion d'hélice dont l'axe coïncide avec l'axe de pivotement dudit support.

De préférence, ladite surface d'appui est une surface cylindrique à génératrices perpendiculaires audit axe de pivotement.

Dans une forme de réalisation préférée, ladite surface directrice se trouve sur le support d'outil et la surface d'appui correspondante se trouve sur l'élément rotatif de commande.

Suivant un aspect particulièrement avantageux de l'invention, les leviers de deux supports d'outils coopèrent avec un même élément rotatif de commande de manière que, pendant une translation dudit élément, un outil fixé à l'un des supports se rapproche de l'axe de rotation tandis qu'un outil fixé à l'autre support s'éloigne de cet axe, leurs surfaces directrices hélicoïdales ayant des pas respectifs de sens opposés.

Une forme préférée de l'unité d'usinage comporte deux éléments rotatifs de commande, mobiles indépendamment en translation et ayant chacun une forme annulaire, ces éléments étant formés respectivement par une douille intérieure, entourant la broche et pourvue d'au moins une surface d'appui sur sa face extérieure, et par une douille extérieure entourant la douille intérieure et pourvue d'au moins une surface d'appui sur sa face intérieure.

Ainsi, la tête rotative peut être équipée de quatre supports d'outils, dont deux sont commandés en pivotement par la douille intérieure, couplée à un premier dispositif de translation, et les deux autres sont commandés en pivotement par la douille extérieure, couplée à second dispositif de translation. De préférence, les quatre surfaces directrices des supports d'outils se trouvent sensiblement dans la même position longitudinale le long de la broche. En outre, les quatre supports d'outils peuvent comporter des porte-outil respectifs qui sont situés sensiblement dans un même plan transversal.

Dans une forme de réalisation particulière de l'unité d'usinage, chaque dispositif de translation comporte une bague non rotative, couplée à l'élément rotatif de commande par l'intermédiaire de roulements, et un actionneur linéaire couplé à ladite bague au moyen d'un mécanisme à fourchette pivotante. De préférence, ladite bague non rotative coopère avec un capteur linéaire de déplacement, raccordé à un dispositif de commande numérique agissant sur ledit actionneur.

La présente invention et ses avantages apparaîtront mieux dans la description suivante d'un exemple de réalisation, présenté à titre non limitatif et illustré par les dessins annexés, dans lesquels :
la fig. 1 est une vue frontale en élévation d'une unité d'usinage selon l'invention, montrant sa tête rotative pourvue de quatre outils pivotants,
la fig. 2 est une vue en plan de l'unité d'usinage de la fig. 1,
la fig. 3 est une vue en coupe axiale suivant la ligne III-III de la fig. 1 dans la tête d'usinage, et suivant un plan vertical dans le reste de l'unité,
la fig. 4 est une vue agrandie en coupe transversale suivant la ligne IV-IV de la fig. 3, montrant une partie du mécanisme de commande de pivotement des outils,
la fig. 5 est une vue de détail en coupe axiale suivant la ligne V-V de la fig. 4, et
la fig. 6 est une vue de détail en coupe axiale suivant la ligne VI-VI de la fig. 4.

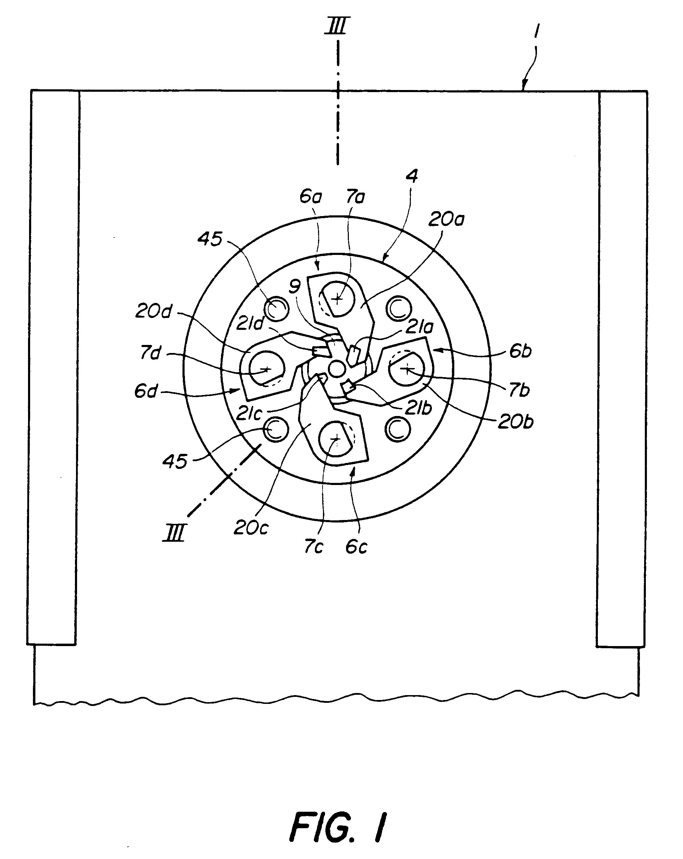

En référence aux figures 1 à 3, l'unité d'usinage comporte un bâti 1 dans lequel est monté un rotor 2 tournant autour d'un axe 3 et comprenant une tête d'usinage 4, une broche creuse 5 solidaire de cette tête, quatre supports d'outils 6a-6d pivotant autour d'axes de pivotement respectifs 7a-7d parallèles à l'axe 3, ainsi que des moyens de commande du pivotement des supports 6a-6d. La broche 5 est pourvue d'un conduit axial 8 dans lequel passe la matière à usiner sous la forme d'une barre ou d'un fil rigide. Dans la zone de la tête d'usinage 4, cette matière est guidée par un canon de guidage 9 non rotatif, monté sur des roulements préchargés à contact oblique 10 et solidaire en rotation d'un tube 11 l'empêchant de tourner. A son extrémité opposée à la tête 4, la broche 5 est équipée d'une poulie d'entraînement 12. Le tube 11 est retenu contre la rotation dans un module complémentaire 13 qui contient un dispositif à pinces 14 assurant le maintien et l'avance de la matière pendant l'usinage et après l'achèvement d'une pièce. Tout comme l'ensemble de l'unité d'usinage, ce dispositif est commandé de préférence au moyen d'une commande numérique dont les éléments ne sont pas représentés.

La tête d'usinage 4 forme un bloc approximativement cylindrique, supporté dans le bâti par un roulement à contact oblique 16 à l'avant et par deux roulements à contact oblique 17 à l'arrière. Ces derniers sont montés en parallèle dans une douille coulissante 18 préchargée axialement par des ressorts 19 s'appuyant contre le bâti 1. Ainsi, la précharge des roulements 16 et 17 disposés en opposition est maintenue constante quelles que soient les variations dimensionnelles des éléments, en particulier de la broche 5. L'utilisation généralisée de roulements de précision à contact oblique permet d'atteindre un niveau vibratoire faible, ainsi que des vitesses de rotation élevées.

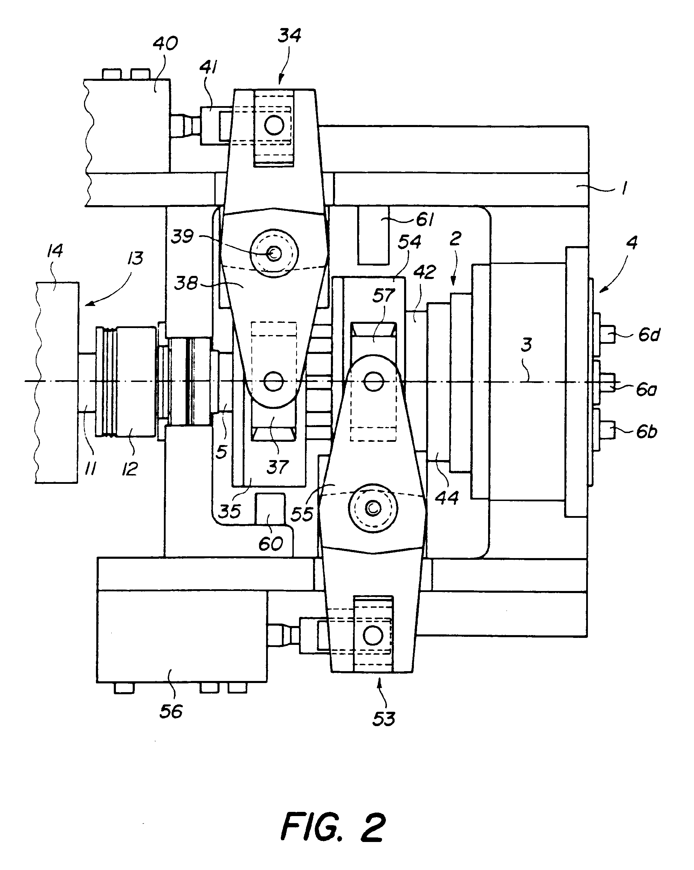

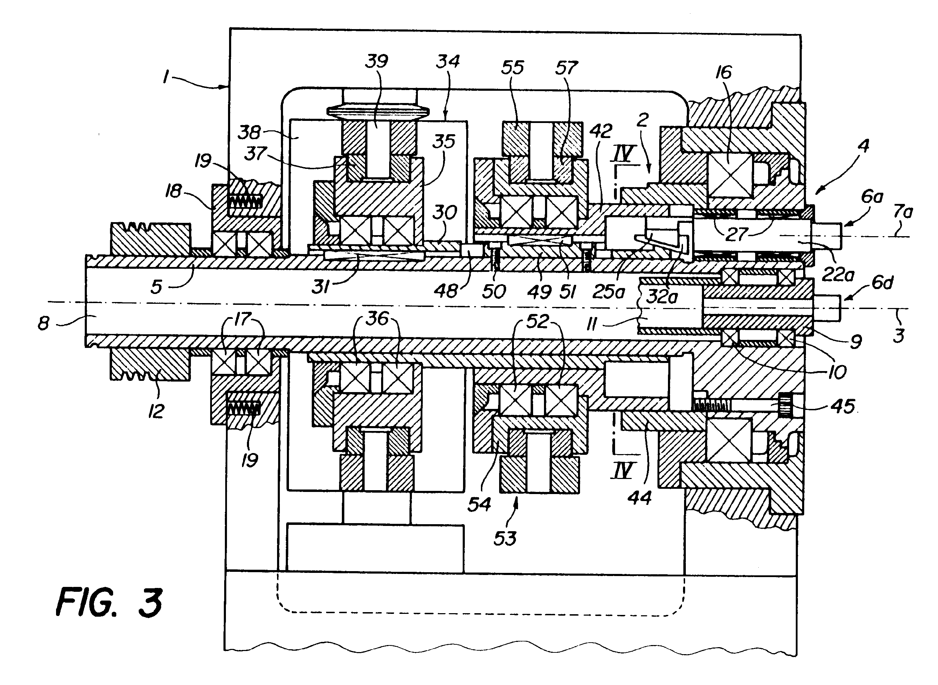

Dans la figure 1, on voit que chaque support d'outils 6a à 6d comporte un bras porte-outil amovible 20a-20d. Quand l'un des supports 6a-6d pivote autour de son axe respectif 7a-7d, la trajectoire de quatre burins 21a à 21d peut aller au moins jusqu'à l'axe de rotation 3, ce qui permet d'usiner une pièce de diamètre quelconque et de la trancher à la fin de l'usinage. De manière connue, la pièce en cours d'usinage peut être tenue par une pince axiale (non représentée) extérieure à l'unité d'usinage. Les porte-outil 20a-20d sont avantageusement situés dans un même plan transversal. Pour clarifier le dessin, ils ne sont pas représentés dans les figures 2 et 3.

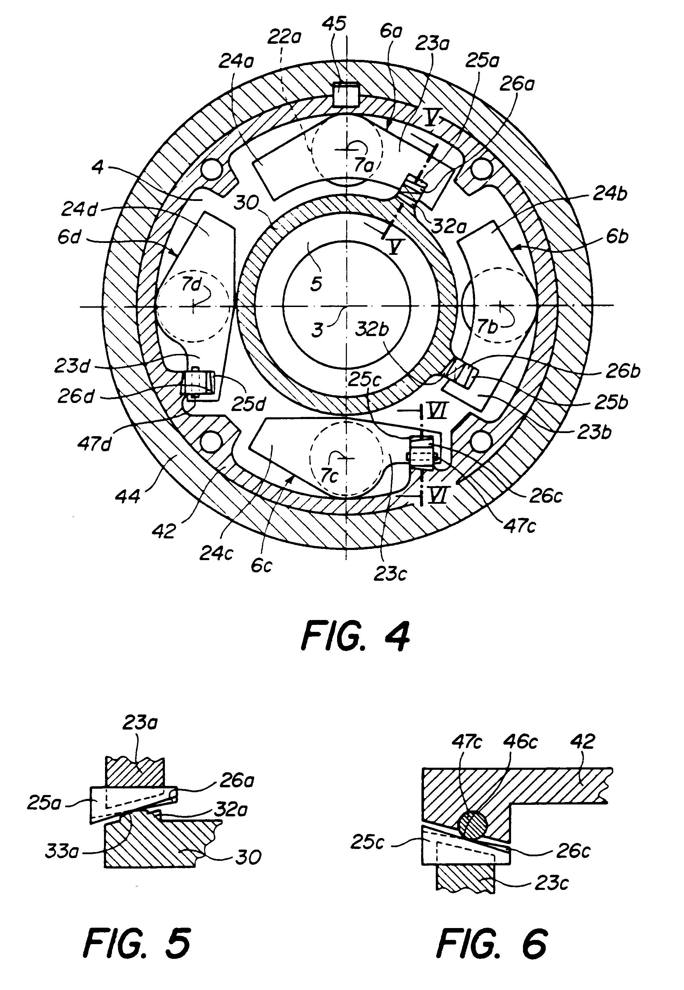

Les figures 1 à 6 montrent que chacun des supports d'outils 6a-6d comporte une partie centrale cylindrique 22a-22d montée sur des roulements à aiguilles 27 et, au dos de la tête 4 (fig. 4), il est élargi sous la forme d'un levier de commande 23a-23d et d'un contrepoids 24a-24d. L'extrémité libre du levier de commande 23a-23d porte latéralement une plaquette en métal dur 25a-25d ayant une surface directrice hélicoïdale 26a-26d. En fait, chacune de ces surfaces est une portion d'une surface d'hélice dont l'axe est précisément l'axe de pivotement 7a-7d du support d'outil correspondant. Cependant, les sens respectifs des hélices des deux surfaces directrices 26a et 26b sont opposés l'un à l'autre. Il en va de même pour les deux surfaces directrices 26c et 26d.

Le pivotement des supports d'outils 6a et 6b est commandé par le coulissement d'une douille intérieure rotative 30 qui entoure la broche 5 et tourne avec elle, cette douille 30 étant guidée en coulissement axial par une clavette 31. Elle est pourvue de deux protubérances 32a et 32b (fig. 4) présentant des surfaces d'appui respectives, telles que 33a, qui sont appliquées contre les surfaces directrices 26a et 26b, le long desquelles elles glissent quand la douille intérieure 30 est déplacée axialement. Ces surfaces d'appui sont des portions de cylindres dont les génératrices sont perpendiculaires aux axes respectifs 7a, 7b, c'est-à-dire que l'appui est linéaire, et non pas ponctuel, le long d'une génératrice commune de la surface d'appui cylindrique et de la surface directrice hélicoïdale. Il en résulte une diminution de la pression de contact et de l'usure, et à long terme une amélioration de la précision de la commande de pivotement.

Le coulissement axial de la douille intérieure 30 est commandé au moyen d'un dispositif de translation 34 (figure 2 et 3) ayant une bague non rotative 35 montée sur la douille 30 par l'intermédiaire de deux roulements sans jeu 36. Cette bague comporte deux encoches opposées dans lesquelles peuvent coulisser deux sabots 37 porté de manière pivotante par un levier en fourchette 38, lequel est monté sur le bâti 1 de façon à pivoter autour d'un axe vertical 39 défini par des paliers exempts de jeu, sous l'effet d'un actionneur linéaire 40 auquel le bras est connecté par une bielle 41. L'actionneur 40 est parallèle à l'axe 3 et il peut être hydraulique, électromécanique ou autre. Dans ce dispositif de translation 34, l'ajustement des éléments et l'utilisation de roulements de précision assurent un fonctionnement pratiquement exempt de jeu. Le coulissement des sabots 37 évite toute charge non axiale sur la broche 5. D'autre part, pour des applications a commande numérique, le système de mesure du déplacement de la douille 30, donc du pivotement des outils, peut être rattaché directement à la bague non rotative 35, ce qui élimine de la mesure toute imprécision pouvant intervenir dans le dispositif de translation 34.

Quand l'actionneur 40 est commandé de manière à faire avancer la douille intérieure 30 en direction de la tête 4, la surface d'appui 33a glisse sur la surface directrice 26a en direction de la gauche dans le cas de la figure 5 et repousse vers l'extérieur le levier 23a, ce qui fait pivoter le support d'outil 6a de façon que le burin 21a se rapproche de l'axe 3 et attaque la pièce à usiner. En même temps, le support d'outil 6b pivote dans le sens opposé puisque sa surface directrice hélicoïdale est de sens opposé, si bien que le burin 21b s'écarte de la pièce à usiner.

Les deux autres supports d'outils pivotants 6c et 6d sont commandés d'une manière similaire, mais en étant appuyés vers l'extérieur contre une douille rotative extérieure 42 entourant la douille intérieure 30 et montée de manière coulissante dans une pièce tubulaire 44 du rotor 2. Cette pièce 44 est fixée au moyen de vis 45 et sert ainsi à bloquer le roulement 16 sur la tête rotative 4. A proximité de son extrémité avant, la douille extérieure 42 appuie sur les surfaces directrices 26c et 26d par des surfaces d'appui telles que 46c, matérialisées dans cet exemple par des barrettes cylindriques 47c, 47d en métal dur, insérées et collées dans des logements ménagés sur la face intérieure de la douille 42. Ces barrettes ont des génératrices perpendiculaires aux axes 7c, 7d des surfaces directrices hélicoïdales 26c, 26d et elles sont donc en contact linéaire avec celles-ci.

La douille intérieure 30 comporte, dans la partie médiane de sa longueur, trois ouvertures 48 disposées à 120° les unes des autres, dans lesquelles se trouvent trois plots de guidage 49 fixés par des vis 50 à la broche 5. Ces plots supportent la partie arrière de la douille extérieure 42 et la guident axialement au moyen de clavettes 51 engagées dans des rainures de la douille 42. Le coulissement de la douille 42 est commandé par un dispositif de translation 53, semblable au dispositif 34 et comportant comme lui une bague non rotative 54 portée par une paire de roulements 52, des sabots coulissants 57, un levier en fourchette 55 et un actionneur linéaire 56 commandé indépendamment de l'actionneur 40. Là aussi, une manoeuvre de l'actionneur 56 fait pivoter l'un des supports d'outils 6c, 6d dans un sens et l'autre dans le sens opposé.

Dans une position médiane de chacun des dispositifs de translation 34 et 53, aucun des quatre outils 6a à 6d n'est en contact avec la pièce à usiner. A partir de cette position, n'importe lequel des quatre outils peut être amené sur la pièce si l'on fait fonctionner l'actionneur correspondant 40, 56 dans le sens approprié. Comme chacune des douilles intérieure 30 et extérieure 42 commande deux outils adjacents, on peut mettre en action simultanément, mais d'une manière indépendante, deux burins opposés par rapport à la pièce, par exemple les burins 21a et 21c.

Par rapport aux têtes d'usinage antérieures utilisant une commande de pivotement des outils au moyen de segments individuels à surfaces coniques, l'unité d'usinage selon l'invention a une construction beaucoup plus simple et plus compacte, bien qu'elle puisse comporter jusqu'à quatre outils différents, contre un maximum de trois outils dans les machines actuelles. Grâce aux dimensions réduites du rotor et à la forme annulaire des deux douilles rotatives 30 et 42 absorbant les forces d'appui qui résultent de l'accélération centrifuge, on obtient un rotor particulièrement rigide et présentant un faible niveau vibratoire, ce qui permet d'augmenter la vitesse de rotation, par exemple jusqu'à environ 12 000 tours/min pour un diamètre intérieur de 80 mm du roulement 16 de la tête d'usinage, en regard d'une vitesse d'environ 8'000 tours/min dans les machines actuelles. La commande de quatre outils au moyen de deux actionneurs seulement représente aussi une importante simplification constructive et fonctionnelle. Enfin, la linéarité du mouvement des outils par rapport à celui du mécanisme de commande, grâce à l'utilisation de surfaces directrices hélicoïdales distinctes pour chaque outil, représente un progrès important dans la précision d'usinage et ouvre de nouvelles applications aux décolleteuses à tête rotative. Elle permet, en cas d'utilisation d'une commande numérique, de mesurer le déplacement radial des outils rotatifs à l'aide de capteurs linéaires de déplacement 60 et 61 montés sur le bâti 1 et coopérant avec les bagues non rotatives 35 et 54.

La présente invention n'est pas limitée à l'exemple de réalisation décrit ci-dessus, mais elle s'étend à toute modification ou variante évidente pour un homme du métier. En particulier on peut concevoir suivant les mêmes principes une tête d'usinage plus simple ayant seulement une paire d'outils et un seul dispositif de translation pour la commande de ces deux outils.

## Revendications

1. Unité d'usinage à tête rotative portant au moins deux outils pivotants pour l'usinage d'une pièce non rotative centrée sur l'axe de rotation de la tête, comportant :
- un bâti sur lequel est monté un rotor comprenant la tête rotative et une broche solidaire de cette tête, le rotor étant pourvu d'un conduit axial et couplé à des moyens d'entraînement en rotation,
- des moyens de guidage axial de la pièce, ces moyens étant montés par des paliers dans la broche ou la tête rotative,
- des moyens pour maintenir et déplacer axialement la pièce,
- au moins deux supports d'outils, montés dans la tête rotative de manière à pivoter autour d'axes respectifs parallèles à l'axe de rotation, chaque support comportant un levier de commande disposé transversalement,
- et des moyens de commande de pivotement, coopérant avec lesdits leviers et comprenant au moins un élément rotatif de commande, qui est mobile en translation axiale dans le rotor et couplé à un dispositif de translation, et des paires d'organes d'appui disposés respectivement sur chaque levier de commande et sur l'élément rotatif de commande correspondant, chaque paire d'organes d'appui comprenant une surface directrice et une surface d'appui s'appuyant contre la surface directrice dans une position variable en fonction de la translation de l'élément rotatif de commande, caractérisée en ce que chaque surface directrice (26a-26d) correspondant à un support d'outil pivotant (6a-6d) a la forme d'une portion d'hélice dont l'axe coïncide avec l'axe de pivotement (7a-7d) dudit support.

2. Unité d'usinage selon la revendication 1, caractérisée en ce que ladite surface d'appui (33a, 46c) est une surface cylindrique à génératrices perpendiculaires audit axe de pivotement (7a, 7c).

3. Unité d'usinage selon la revendication 1, caractérisée en ce que ladite surface directrice (26a-26d) se trouve sur le support d'outil (6a-6d) et la surface d'appui correspondante se trouve sur l'élément rotatif de commande (30, 42).

4. Unité d'usinage selon la revendication 1, caractérisée en ce que les leviers (23a-23d) de deux supports d'outils (6a et 6b; 6c et 6d) coopèrent avec un même élément rotatif de commande (30, 42) de manière que, pendant une translation dudit élément, un outil fixé à l'un des supports se rapproche de l'axe de rotation tandis qu'un outil fixé à l'autre support s'éloigne de cet axe, leurs surfaces directrices hélicoïdales (26a et 26b) ayant des pas respectifs de sens opposés.

5. Unité d'usinage selon la revendication 3, caractérisée en ce qu'elle comporte deux éléments rotatifs de commande (30, 42), mobiles indépendamment en translation et ayant chacun une forme annulaire, ces éléments étant formés respectivement par une douille intérieure (30), entourant la broche (5) et pourvue d'au moins une surface d'appui (33a) sur sa face extérieure, et par une douille extérieure (42) entourant la douille intérieure (30) et pourvue d'au moins une surface d'appui (46c) sur sa face intérieure.

6. Unité d'usinage selon les revendications 4 et 5, caractérisée en ce que la tête rotative (4) est équipée de quatre supports d'outils (6a-6d),dont deux sont commandés en pivotement par la douille intérieure (30), couplée à un premier dispositif de translation (34), et les deux autres sont commandés en pivotement par la douille extérieure (42), couplée à second dispositif de translation (53).

7. Unité d'usinage selon la revendication 6, caractérisée en ce que les quatre surfaces directrices (26a-26d) des supports d'outils se trouvent sensiblement dans la même position longitudinale le long de la broche (5).

8. Unité d'usinage selon la revendication 6, caractérisée en ce que les quatre supports d'outils (6a-6d) comportent des porte-outil respectifs (20a-20d) qui sont situés sensiblement dans un même plan transversal.

9. Unité d'usinage selon la revendication 1, caractérisée en ce que chaque dispositif de translation (34, 53) comporte une bague non rotative (35, 54), couplée à l'élément rotatif de commande (30, 42) par l'intermédiaire de roulements, et un actionneur linéaire (40, 56) couplé à ladite bague au moyen d'un mécanisme à fourchette pivotante (38, 55).

10. Unité d'usinage selon la revendication 9, caractérisée en ce que ladite bague non rotative (35, 54) coopère avec un capteur linéaire de déplacement, (60, 61) raccordé à un dispositif de commande numérique agissant sur ledit actionneur (40, 56).

## Patentansprüche

1. Bearbeitungseinheit mit drehendem Kopf, der mindestens zwei schwenkbare Werkzeuge trägt, für die Bearbeitung eines nicht drehenden Werkstückes, das auf der Drehachse des Kopfes zentriert ist, bestehend aus:
- einem Gestell, auf dem ein Rotor montiert ist, der aus dem drehenden Kopf und einer Spindel, die mit diesem Kopf fest verbunden ist, besteht, wobei der Rotor mit einem axialen Rotor versehen ist und mit Einrichtungen für den Antrieb einer Drehbewegung gekoppelt ist;
- Einrichtungen für die axiale Führung des Werkstückes, wobei diese Einrichtungen mit Hilfe von Lagern in der Spindel oder in dem drehenden Kopf eingebaut sind;
- Einrichtungen für das Festhalten und für die axiale Verstellung des Werkstückes;
- mindestens zwei Supporte für die Werkzeuge, die in dem drehenden Kopf derart eingebaut sind, daß sie um die jeweiligen Achsen, die zu der drehen- den Achse parallel sind, schwenken können, wobei jeder Support einen Betätigungshebel besitzt, der quer angeordnet ist,
- und Einrichtungen für die Steuerung der Schwenk- bewegung, die mit den besagten Hebeln zusammen- wirken und mindestens aus einem drehenden Steuerungsteil, das für eine axiale Verschiebung in dem Rotor beweglich und mit einer Steuereinrichtung für die Verschiebung gekoppelt ist, und aus Paaren von Stützen, die jeweils auf jedem der Betätigungshebel und auf dem entsprechenden drehenden Steuerungsteil angeordnet sind, bestehen, wobei jedes Paar von Stützen, das aus einer Leitfläche und aus einer Stützfläche besteht, gegen die Leitfläche in einer veränderlichen Lage in Abhängigkeit von der Verschiebung des drehenden Steuerungsteils aufliegt,
**dadurch gekennzeichnet**, daß jede Leitfläche (26a-26d), die einem schwenkenden Werkzeugsupport (6a-6d) entspricht, die Form eines Schneckenteiles besitzt, dessen Achse mit der Schwenkachse (7a-7d) des besagten Supports zusammenfällt.

2. Bearbeitungseinheit nach Anspruch 1,
**dadurch gekennzeichnet**, daß die besagte Stützfläche (33a,46c) eine zylindrische Fläche mit Erzeugenden bzw. Mantellinien, die zu der besagten Schwenkachse (7a,7c) senkrecht sind, ist.

3. Bearbeitungseinheit nach Anspruch 1,
**dadurch gekennzeichnet**, daß die besagte Leitfläche (26a-26d) sich auf dem Werkzeugsupport (6a-6d) befindet und die entsprechende Stützfläche sich auf dem drehenden Steuerungsteil (30,42) befindet.

4. Bearbeitungseinheit nach Anspruch 1,
**dadurch gekennzeichnet**, daß die Hebel (23a-23d) von zwei Werkzeugsupporten (6a und 6b; 6c und 6d) mit ein und demselben drehenden Steuerungsteil (30,42) derart zusammenwirken, daß während einer Verschiebung des besagten Steuerungsteiles ein Werkzeug, das auf einem der Supporte befestigt ist, sich an die Drehachse nähert, während ein Werkzeug, das an dem anderen Support befestigt ist, sich von dieser Achse entfernt, da deren schneckenförmige Leitflächen (26a und 26b) jeweilige Steigungen von entgegengesetzten Richtungen besitzen.

5. Bearbeitungseinheit nach Anspruch 3,
**dadurch gekennzeichnet**, daß sie zwei drehende Steuerungsteile (30,42) enthält, die für eine Verschiebung unabhängig beweglich sind und jeweils eine Ringform aufweisen, wobei jeder dieser Teile aus einer inneren Buchse (30), die die Spindel (5) umgibt und auf ihrer außenliegenden Seite mindestens mit einer Stützfläche (33a) versehen ist, und aus einer außenliegenden Buchse (42), die die innere Buchse (30) umgibt und auf ihrer inneren Seite mit einer Stützfläche (46c) versehen ist.

6. Bearbeitungseinheit nach Anspruch 4 und 5,
**dadurch gekennzeichnet**, daß der drehende Kopf (4) mit vier Supporten für Werkzeuge (6a-6d) ausgerüstet ist, wovon zwei durch die innere Buchse (30), die mit einer ersten Einrichtung für eine Verschiebung (34) gekoppelt ist, für eine Schwenkbewegung gesteuert werden und die zwei anderen Werkzeugsupporte durch die außenliegende Buchse (42), die mit einer zweiten Einrichtung für eine Verschiebung (53) gekoppelt ist, für eine Schwenkbewegung gesteuert werden.

7. Bearbeitungseinheit nach Anspruch 6,
**dadurch gekennzeichnet**, daß die vier Leitflächen (26a-26d) der Werkzeugsupporte sich etwa in der gleichen longitudinalen Stellung entlang der Spindel (5) befinden.

8. Bearbeitungseinheit nach Anspruch 6,
**dadurch gekennzeichnet**, daß die vier Werkzeugsupporte (6a-6d) jeweilige Werkzeughalter (20a-20d) besitzen, die etwa in einer gleichen querliegenden Ebene angeordnet sind.

9. Bearbeitungseinheit nach Anspruch 1,
**dadurch gekennzeichnet**, daß jede Einrichtung für eine Verschiebung (34,53) einen nicht drehenden Ring (35,54), der mit dem drehenden Steuerungsteil (30,42) mit Hilfe von Wälzlagern gekoppelt ist, und ein lineares Stellgerät (40,56), das mit dem besagten Ring mit Hilfe einer mechanischen Einrichtung mit schwenkbarer Gabel (38,55) gekoppelt ist, besitzt.

10. Bearbeitungseinheit nach Anspruch 9,
**dadurch gekennzeichnet**, daß der besagte nicht drehende Ring (35,54) mit einem linearen Verstellungsgeber (60,61) zusammenwirkt, der mit einer Vorrichtung für numerische Steuerung, die auf dem besagten Stellgerät (40,56) wirkt, verbunden ist.

## Claims

1. Rotary head machining unit holding at least two pivoting tools for machining a non-rotating part centered on the axis of rotation of the head, comprising:
- a frame to which are attached a rotor comprising the rotary head and a spindle integral with it, the rotor having an axial conduit and being connected with rotary drive means;
- axial means for guiding said part, said means being attached with bearings to the spindle or the rotary head;
- means for maintaining and axially displacing the part;
- at least two tool supports attached to the rotary head so as to pivot around respective axles parallel to the axis of rotation, each support having a transversely disposed control lever;
- and means for controlling pivoting which cooperate with said levers and comprise at least one rotary control element which is movable in axial translation within the rotor and is attached to a translation device, and pairs of contact means disposed on each control lever, respectively, and on the corresponding rotary control element, each pair of contact means comprising a guiding surface and a contact surface resting on the guiding surface in a position which varies as a function of translation of the rotary control element, characterized in that each guiding surface (26a-26d) corresponding to a pivoting tool support (6a-6d) is shaped like a partial helix, the axis of which corresponds with the pivoting axle (7a-7d) of said support.

2. Machining unit according to claim 1, characterized in that said contact surface (33a, 46c) is a cylindrical surface with generatrices perpendicular to said pivoting axle (7a, 7c).

3. Machining unit according to claim 1, characterized in that said guiding surface (26a-26d) is located on the tool support (6a-6d) and the corresponding contact surface is located on the rotary control element (30, 42).

4. Machining unit according to claim 1, characterized in-that the levers (23a-23d) of the two tool supports (6a and 6b; 6c and 6d) cooperate with the same rotary control element (30, 42) so that during translation of said element, a tool attached to one of the supports moves close to the axis of rotation while a tool attached to the other support moves away from said axis, their respective helicoidal guiding surfaces (26a and 26b) each being pitched in the opposite direction.

5. Machining unit according to claim 3, characterized in that it comprises two rotary control elements (30, 42) independently movable in translation and each being annular in shape, these elements being respectively formed of an interior socket (30) surrounding the spindle (5) and provided with at least one contact surface (33a) on its outside surface, and of an exterior socket (42) surrounding the interior socket (30) and provided with at least one contact surface (46c) on its interior surface.

6. Machining unit according to claims 4 and 5, characterized in that the rotary head (4) is equipped with four tool supports (6a-6d), the pivoting of two these being controlled by the interior socket (30) connected to a first translation device (34), and pivoting of the two others is controlled by the exterior socket (42) connected to the second translation device (53).

7. Machining unit according to claim 6, characterized in that the four guiding surfaces (26a-26d) of the tool supports are located in essentially the same longitudinal position along the spindle (5).

8. Machining unit according to claim 6, characterized in that the four tool supports (6a-6d) comprise respective tool holders (20a-20d) which are situated in essentially the same transverse plane.

9. Machining unit according to claim 1, characterized in that each translation device (34, 53) comprises a non-rotating ring (35, 54) connected to the rotary control element (30, 42) by means of bearings, and a linear actuator (40, 56) connected to said ring by means of a pivoting fork mechanism (38 - 55).

10. Machining unit according to claim 9, characterized in that said non-rotating ring (35, 54) cooperates with a linear displacement sensor (60, 61) connected to a numerical control device acting upon said actuator (40, 56).
